# EUROPEAN PATENT SPECIFICATION

(11) **EP 2 433 258 B1**
(45) Date of publication and mention of the grant of the patent: **26.09.2018**
(21) Application number: 10778307.8
(22) Date of filing: 19.05.2010
(51) Int. Cl.: G06Q 30/02, G06F 21/62

(54) **PROTECTED SERVING OF ELECTRONIC CONTENT**
GESCHÜTZTE LIEFERUNG VON ELEKTRONISCHEM INHALT
LIVRAISON PROTÉGÉE DE CONTENU ÉLECTRONIQUE

(30) Priority: 20.05.2009 US 469166
(43) Date of publication of application: 28.03.2012
(73) Proprietor: Amazon Technologies, Inc., Reno, NV 89507 (US)
(72) Inventor: ERDMANN, David, Seattle WA 98109 (US); LEE, Joseph, C., Seattle WA 98109 (US); CARLSON, Adam, Seattle WA 98109 (US); ANTON, Richard, N., Seattle WA 98109 (US); SMITH, Michael, Wayne, Seattle WA 98109 (US); WINOGARD, Richard, J., Seattle WA 98109 (US)
(74) Representative: J A Kemp
(86) International application number: PCT/US2010/035360
(87) International publication number: WO 2010/135399

(56) References cited:
- US-A1- 2005 091 111
- US-A1- 2007 239 530
- US-A1- 2008 298 342
- US-A1- 2009 070 190
- US-A1- 2009 099 901

## Description

### BACKGROUND

As there is an increasing number of users viewing information and ordering items and services electronically, there is a corresponding increase in the amount of supplemental content provided to users. This supplemental or "targeted" content can include elements such as advertising, related applications or contents, recommendations, etc. In some cases, this supplemental content is dynamically determined for specific users, user types, user demographics, user behaviors, groups, categories, pages, sites, or interfaces to be displayed. In other cases, supplemental content such as advertising is selected based on the "core" content of a page or other grouping of information to be displayed. In still other cases, supplemental content can be selected at random or using any of a number of algorithms for providing content to a specified number of users, regardless of the page or location of the content when displayed.

In the case of advertising, for example, many content providers work with an advertising entity that manages advertisements to be displayed or otherwise included with that provider's content. In order to display ads that are likely to be relevant to the user viewing the content, the provider may specify a category, type of content, user information or other appropriate types of information relating to the viewing of content by the user. In this way, the content provider can provide an ad that is likely to be of interest to the user based upon aspects such as the content, past user behavior, user preferences, etc. For example, if a user is viewing a page relating to children's books, then the provider might provide the advertising entity with a "children's books" category description that indicates the type of content the user is viewing. An advertiser or other such content provider can then select an ad or other supplemental content that is at least somewhat related to the category of children's books.

Unfortunately, this targeting information can be intercepted or otherwise captured by unauthorized third parties. For example, an advertising company can manipulate images for various advertisements to include code for capturing information from requests or links, such as uniform resource locators (URLs) for the advertisements. Using such information, the third party can obtain information about the types of pages a user visits by, for example, storing a user identifier in a cookie on the user's browser and tracking the category information for a given user identifier. In this way, when that user visits a site, advertisements can be targeted to that user regardless of the type of site on which the ad is displayed.

Such use of information enables third parties to track information about users without their knowledge. An increasing amount of attention is being paid to the exposure of such information by privacy advocates and others. Further, these third parties can target users based on this information, and thus can lure advertisers or other content providers that might otherwise work directly with the content provider. This third party is then using information captured from the content provider to take compensation and other opportunities away from the content provider.

US 2008/298342 A1 discloses a computer-implemented method for performing inter-domain communication in a web browser including receiving first data from a first domain at a router associated with one or more domains other than the first domain, identifying at the router the one or more domains for receiving data associated with the received data, and transmitting second data associated with the received data to the one or more domains. Each mapplet, which is a particular form of a portable program module (i.e., a program that performs a defined function and can be inserted in a variety of environments, such as in various iframes on various web pages) may include meta data properties, user preferences with default values, HTML text, and script code. The script allows the mapplet to implement behavior and functionality. The code runs in an iframe that is hosted on a domain that differs from the domain for the maps application, and communicates with the maps application using cross-frame or inter-domain calls.

US 2007/0239530 A1 discloses that advertiser repository information (e.g., a list of HTML pages) may be used to automatically generate a page-ad and associated ad information for each page using a subset of features of the page. Subsequently, a page-ad index for all pages from different advertisers may be created. After creating a page-ad index, if a client issues a query (e.g., from a search engine), candidate page-ads may be selected using the page-ads index.

US 2005/0091111 A1 discloses a method of interactive advertising for the Internet in which a commercial link for an ad space is embedded in the text of a Web page. The contextual targeting for the page is determined by analyzing the overall content of the page or determining the presence of individual keywords within the text content of the page. A keyword that is visually distinguished from the surrounding page content triggers an ad space to display a message, which may include a product related to the text. The web page is analyzed to determine appropriate keywords within the text to associate with the ad space. Upon user interaction with the keyword, an ad space provides a customized message that is contextually targeted to the user.

US 2009/099901 A1 describes mechanisms and techniques to provide information from external sources to web-based documents such as web pages. For example, a web page or a program may act as a container document for a portable program module such as a gadget. The gadget may be programmed to identify information about the container document, to pass such information to an ad server, to receive targeting information back from the ad server, and to supply the targeting information to a server separate from the ad server. The gadget may then create an advertisement for display using information returned from the separate server. In one example, the gadget may generate an ad that is targeted to a page and includes real-time information from an on-line auction service such as eBay.

US 2009/070190 A1 discloses ways to update and permit third-party advertising content of a webpage developed using Asynchronous JavaScript and XML ("AJAX") techniques. An illustrative method includes registering a set of possible triggering events that can invoke an advertisement-update process, registering advertisement containers (portions of the webpage that can present the advertisements), receiving an indication that a triggering event has occurred, identifying (in some cases) advertisement containers whose advertisement content is to be updated, accessing third-party advertisement data that is stored outside of the domain of the webpage to receive the fresh advertising content, and presenting the fresh advertising content in the one or more advertisement containers.

It is the object of the present invention to provide an improved method and system for providing supplementary electronic content.

The object is achieved by the subject matter of the independent claims.

Embodiments are defined by the dependent claims.

### BRIEF DESCRIPTION OF THE DRAWINGS

Various embodiments in accordance with the present disclosure will be described with reference to the drawings, in which:
**FIG. 1** illustrates an environment in which various embodiments can be implemented;
**FIG. 2** illustrates a system for providing a user with content from multiple domains that can be used in accordance with one embodiment;
**FIGS. 3(a)** and **3(b)** illustrate frames of content corresponding to multiple domains that can be used in accordance with one embodiment;
**FIG. 4** illustrates an arrangement of nested frames that can be used to serve advertising content in accordance with one embodiment;
**FIG. 5** illustrates a logical flow of requests for a client browser that can be used in accordance with one embodiment;
**FIG. 6** illustrates a first example flow of requests and responses between components that can be used to serve supplemental content in accordance with one embodiment;
**FIG. 7** illustrates a second example flow of requests and responses between components that can be used to serve supplemental content in accordance with one embodiment;
**FIG. 8** illustrates an example process for providing supplemental content that can be used in accordance with one embodiment; and
**FIG. 9** illustrates an example process for receiving supplemental content that can be used in accordance with one embodiment.

### DETAILED DESCRIPTION

Systems and methods in accordance with various embodiments of the present disclosure may overcome one or more of the aforementioned and other deficiencies experienced in conventional approaches to providing targeted and/or supplemental content in an electronic environment. Systems and methods in accordance with various embodiments provide for the protecting of targeting and other such information used to request supplemental content from other providers or domains that enables a provider to determine the type of content being requested, while preventing third parties from determining information such as the source of the initial content, targeting information used to determine the content, and other such aspects. Generally, a "domain" refers to an organized collection of network devices, applications, and/or services, which typically are identified using a domain "name." A single content provider might utilize multiple domains for different purposes on a single page. Although a common use of the word "domain" in such a context often currently refers to Internet-based technology, it should be understood that domains can be used in any appropriate network setting, and that advantages of embodiments discussed and suggested herein can be applied to any of these networks as appropriate. Further, while the explanation below refers to advertisements for simplicity of explanation, it should be understood that various other types of supplemental or targeted content can be provided from other domains or entities as well, using such approaches, including types of supplemental content such as such as games, video, audio, text, and/or other such types of content. In some cases, this content from a separate entity will be referred to as "supplemental content" or "customized content." It thus should be apparent that the use of advertising and advertising-related descriptions with respect to the various embodiments should not be interpreted as a limitation on the scope, advantages, or applicability of the various embodiments.

Systems and methods in accordance with various embodiments provide for the loading of targeted or supplemental content, such as advertising content, on a page or other grouping of content or information from a content provider. In many examples below the provider will be an electronic retailer or provider of an electronic marketplace, but it should be understood that the provider can be any appropriate publisher of content in an electronic environment. In an Internet-based example, this can include serving ads or other supplemental content to be displayed on a page of content in a browser, where the "core" content of the page comes from the original content provider of the page. Approaches discussed herein allow for this third party content to be specified and loaded from a third party without exposing contextual data, such as referral uniform resource locators (URLs) and URLs to an advertising ("ad") server, supplemental content selection service, or other such entity that may contain information that could be used to build a profile for a particular customer or other user of the content provider site. Such an approach also protects the proprietary targeting, user, and categorization information of the provider that can be used by a third party to determine aspects such as the popularity of various portions of the provider site, behaviors of a user, and categories of advertising used by the provider. Various approaches also have the benefit that the pages can load various portions quickly and in parallel.

When used in an Internet-based context, at least one interface element such as an inline frame ("iFrame"), inline object, or block-level element can be used on a page to provide for use of a separate domain, herein referred to as a "shadow domain". The interface element can be any appropriate element that includes a level of domain-based protection, such as HTML elements or objects that are prevented from cross-domain communication in a browser or other such application or interface. The use of a shadow domain in an iFrame allows a URL to be determined for the desired supplemental content without the identity of the original content provider being determinable based on the URL alone. Nested iFrames, or multiple other such interface elements, can be used to pass information to other domains, such as to a shadow domain and then on to one or more advertising entities, as well as to one or more advertising management entities. A first iFrame on a page can be what is referred to herein as a "friendly" iFrame. A "friendly" iFrame is an iFrame that comes from, or resides in, the same domain as the parent page (or another page or element including that iFrame. Because the iFrame is in the same domain, the iFrame is able to communicate with the parent page. Such an approach allows the iFrame to access information from the parent page in some embodiments, while also allowing content of the friendly iFrame to manipulate area outside the iFrame in others. Various other advantages can be obtained as well in accordance with the various embodiments.

An approach in accordance with one embodiment uses a friendly iFrame to obtain information to be passed to a supplemental content selection service, such as an ad server, whereby the selection service can select appropriate supplemental content (or a type of supplemental content) to display. A single iFrame file (or other set or grouping of information) can be used for various content types and providers, such that the file can be cached and thus does not necessarily need to be retransmitted to the client application for each instance of supplemental content. The iFrame file can include JavaScript or other such client-side code that is able to parse variables from the URL, or obtain variables from the parent page when in the same domain, to make a call to the appropriate selection service with the segmentation information needed to make a decision as to an appropriate supplemental to serve. The selection service can select content to serve, and in embodiments where the selection service does not actually provide the content, can return a reference to a file or other such information that is held on another third party domain. A call can be generated for a shadow domain file in a nested iFrame, within the first iFrame, which can be cached once downloaded so subsequent calls do not need to be made for each instance. Instead of targeting data or other such information from the content provider, however, the call to the shadow domain can include supplemental content parameters specified by the selection service. These parameters can also be passed through the URL. One way is to append the parameters following an anchor or "#" symbol, which has been traditionally been used to link to an anchor within the page of a URL. These parameters will be referred to herein as "anchor parameters" for sake of explanation, although it should be understood that these parameters generally do not function as anchors in such situations. A cached template file can be used in the shadow domain to call the supplemental content provider and locate the content within the nested iFrame. In this way, the content from the supplemental content provider can only see the referrer as the shadow domain, or possibly the first iFrame, but cannot see the original content provider referral information or anything about the parent page for which the supplemental was served. Further, the content from the supplemental content provider can only see the content parameters from the selection service, which might specify a particular type of content, and cannot see the targeting data originally provided from the content provider.

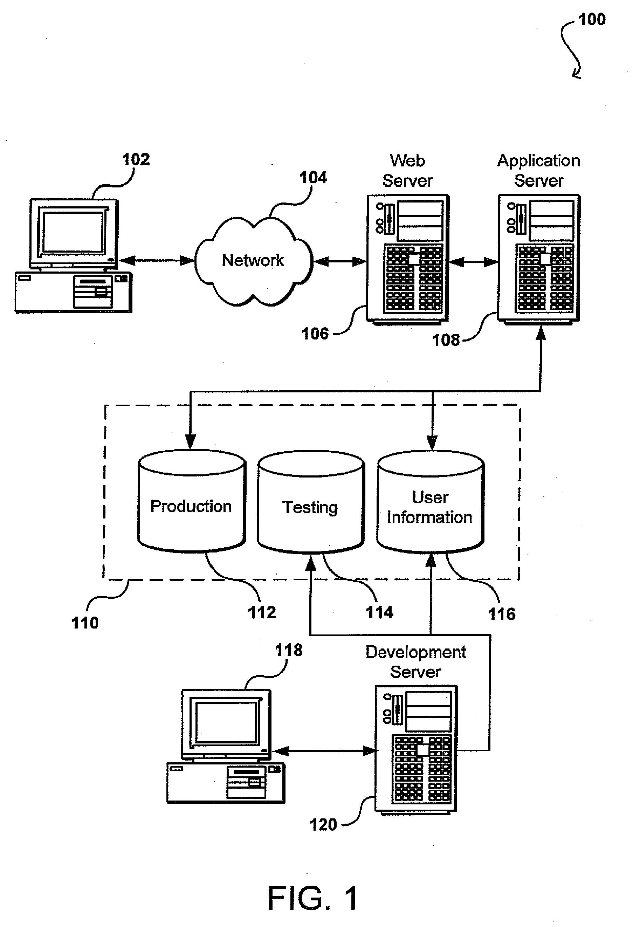

**FIG. 1** illustrates an example of an environment **100** for implementing aspects in accordance with various embodiments. As will be appreciated, although a Web-based environment is used for purposes of explanation, different environments may be used, as appropriate, to implement various embodiments. The environment **100** shown includes both a testing or development portion (or side) and a production portion. The production portion includes an electronic client device **102,** which can include any appropriate device operable to send and receive requests, messages, or information over an appropriate network **104** and convey information back to a user of the device. Examples of such client devices include personal computers, cell phones, handheld messaging devices, laptop computers, set-top boxes, personal data assistants, electronic book readers, and the like. The network can include any appropriate network, including an intranet, the Internet, a cellular network, a local area network, or any other such network or combination thereof. Components used for such a system can depend at least in part upon the type of network and/or environment selected. Protocols and components for communicating via such a network are well known and will not be discussed herein in detail. Communication over the network can be enabled by wired or wireless connections, and combinations thereof. In this example, the network includes the Internet, as the environment includes a Web server **106** for receiving requests and serving content in response thereto, although for other networks an alternative device serving a similar purpose could be used as would be apparent to one of ordinary skill in the art.

The illustrative environment includes at least one application server **108** and a data store **110.** It should be understood that there can be several application servers, layers, or other elements, processes, or components, which may be chained or otherwise configured, which can interact to perform tasks such as obtaining data from an appropriate data store. As used herein the term "data store" refers to any device or combination of devices capable of storing, accessing, and retrieving data, which may include any combination and number of data servers, databases, data storage devices, and data storage media, in any standard, distributed, or clustered environment. The application server can include any appropriate hardware and software for integrating with the data store as needed to execute aspects of one or more applications for the client device, handling a majority of the data access and business logic for an application. The application server provides access control services in cooperation with the data store, and is able to generate content such as text, graphics, audio, and/or video to be transferred to the user, which may be served to the user by the Web server in the form of HTML, XML, or another appropriate structured language in this example. The handling of all requests and responses, as well as the delivery of content between the client device **102** and the application server **108,** can be handled by the Web server. It should be understood that the Web and application servers are not required and are merely example components, as structured code discussed herein can be executed on any appropriate device or host machine as discussed elsewhere herein. Further, the environment can be architected in such a way that a test automation framework can be provided as a service to which a user or application can subscribe. A test automation framework can be provided as an implementation of any of the various testing patterns discussed herein, although various other implementations can be used as well, as discussed or suggested herein.

The environment also includes a development and/or testing side, which includes a user device **118** allowing a user such as a developer, data administrator, or tester to access the system. The user device **118** can be any appropriate device or machine, such as is described above with respect to the client device **102.** The environment also includes a development server **120,** which functions similar to the application server **108** but typically runs code during development and testing before the code is deployed and executed on the production side and is accessible to outside users, for example. In some embodiments, an application server can function as a development server, and separate production and testing storage may not be used.

The data store **110** can include several separate data tables, databases, or other data storage mechanisms and media for storing data relating to a particular aspect. For example, the data store illustrated includes mechanisms for storing production data **112** and user information **116,** which can be used to serve content for the production side. The data store also is shown to include a mechanism for storing testing data **114,** which can be used with the user information for the testing side. It should be understood that there can be many other aspects that may need to be stored in the data store, such as for page image information and access right information, which can be stored in any of the above listed mechanisms as appropriate or in additional mechanisms in the data store **110.** The data store **110** is operable, through logic associated therewith, to receive instructions from the application server **108** or development server **120,** and obtain, update, or otherwise process data in response thereto. In one example, a user might submit a search request for a certain type of item. In this case, the data store might access the user information to verify the identity of the user, and can access the catalog detail information to obtain information about items of that type. The information then can be returned to the user, such as in a results listing on a Web page that the user is able to view via a browser on the user device **102.** Information for a particular item of interest can be viewed in a dedicated page or window of the browser.

Each server typically will include an operating system that provides executable program instructions for the general administration and operation of that server, and typically will include a computer-readable medium storing instructions that, when executed by a processor of the server, allow the server to perform its intended functions. Suitable implementations for the operating system and general functionality of the servers are known or commercially available, and are readily implemented by persons having ordinary skill in the art, particularly in light of the disclosure herein.

The environment in one embodiment is a distributed computing environment utilizing several computer systems and components that are interconnected via communication links, using one or more computer networks or direct connections. However, it will be appreciated by those of ordinary skill in the art that such a system could operate equally well in a system having fewer or a greater number of components than are illustrated in **FIG. 1****.** Thus, the depiction of the system **100** in **FIG. 1** should be taken as being illustrative in nature, and not limiting to the scope of the disclosure.

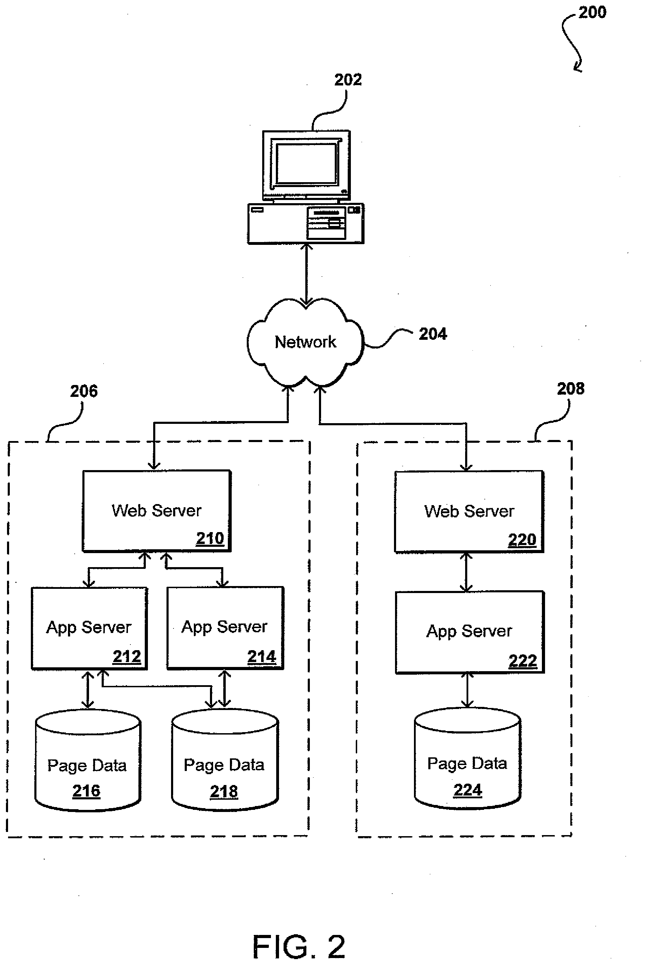

An environment such as that illustrated in **FIG. 1** can be useful for a provider such as an electronic marketplace, wherein multiple sources might be used to provide content for different portions of a generated page. As discussed above, however, sometimes a provider such as an electronic marketplace might wish to generate pages that pull content such as advertisements or personalized content from multiple domains, either from the same provider or from other providers. The electronic environment in such a case might include additional components and/or other arrangements, such as those illustrated in the configuration **200** of **FIG. 2****.** In this example, a user of a client device **202** might submit a request for content across a network **204** that is directed to at least one provider **206, 208.** In order to respond to the request, such as by sending a reply page to be displayed on the client device **202,** content might be provided by a Web server **210** of a first provider, which might utilize one or more application servers **212, 214** to pull content from one or more data repositories **216, 218** and generate page content to be rendered by the client device **202.** In some cases, each application server **212, 214** for the provider might correspond to a different domain. For example, a first application server **212** might correspond to a non-secure domain, which provides content such as landing pages or static content pages. A second application server **214** might correspond to a secure domain, which might provide functionality such as virtual shopping carts, online payments, and other such secure operations.

In order to provide all necessary content for the page, at least a portion of the content also might be provided by at least one other provider **208,** such as an advertising entity providing advertising content. In this case, a Web server **220** might serve content from an application server **222** able to pull content from at least one repository **224,** and the server **222** might send the content directly to the client device **202** across the network **204** or in some embodiments might send the content to the first provider **206** such that the first provider sends all page content together. In this example, the second provider **208** also might correspond to a separate domain. Although two content providers are shown, and the example is described with respect to three domains for a page, it should be understood that any of a number of providers and/or domains could be used to provide content for a page as known or used in the art.

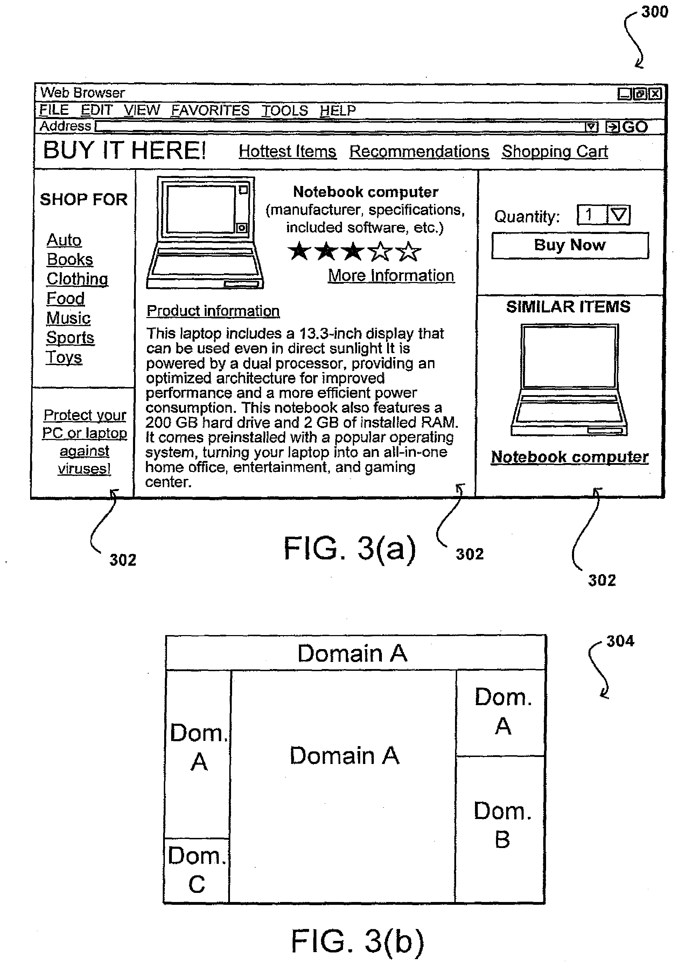

**FIG. 3(a)** illustrates an example of a page **300** that could be generated by a system such as that illustrated in **FIG. 2****.** In this example, the page includes a number of frames **302** in a frameset that each typically display content derived from a specific location (*e.g.,* a specified uniform resource locator (URL)). As shown, the frames can provide various functionality, such as providing a display page of information about an item, the ability to purchase the item, providing related advertisements, providing the ability to navigate to other content, etc. As discussed, this functionality can be provided from sources corresponding to different domains.

For example, **FIG. 3(b)** illustrates a layout **304** indicating a domain corresponding to each frame shown in the example page of **FIG. 3(a)****.** In this example, the overall page or site accessed by the user is provided from Domain A, which can correspond to a provider of the site. In this case, frames that may correspond to a title bar, a set of navigational links, a display page including the requested content to be viewed by the user, and a link to a similar item, as well as other such content can all be provided from Domain A. Even though the overall marketplace is provided from Domain A, other content displayed in frames of the page can come from other domains, such as an advertisement from Domain C and personalized content from Domain B. It is common to provide advertisements and/or other related or personalized content from other domains, and display this content in a designated frame on the page. In some cases, the advertisements will come from an advertising entity or other such party. In other cases, a provider might simply use a different domain for particular types of content. For example, an electronic marketplace provider might use a first domain to display content about a particular item, and a separate domain to display search results or recommendations that are related to that item.

One reason for using separate frames with separate domains is that many conventional browsers or other such interface applications do not allow for cross-domain communication. Thus, while a content provider might want to display an ad or other type of supplemental content from another domain on that page, the provider may not want that domain to have any control over, or ability to modify, the content from the other domains. This not only gives the content provider control over what is displayed on the page (other than, to some degree, the content from the other domain), but reduces the risk for malicious attacks from the other domain or persons mimicking requests from the other domain. Such use also controls the real estate or portion of a given page that the other domain can control. Accordingly, information to be passed to the other domain typically is included in the initial call or request to that domain. Often, this takes the form of parameters passed in a uniform resource locator (URL) or other call to source the frame on the page.

In some conventional approaches, at least one domain-restricted interface element, such as an inline frame (commonly referred to as an "iFrame"), is used to display supplemental or targeted content such as advertisements from a separate domain. An iFrame is a structure in the hypertext markup language (HTML) that allows another HTML document or other such object to be inserted into an HTML page, similar to a standard frame. An iFrame typically is included in a page using an <iframe> tag including a source attributed to designate the URL of a page to be displayed in the iframe. An example of an iFrame tag is as follows: <iframe src="pageURL"></iframe> where "PageURL" corresponds to the URL or location of the content. The iFrame tag can include various other attributes known in the art, such as to set dimensions of the iFrame. Further, the source attribute does not need to specify a page, but can point to a document, image, object, or other element capable of being displayed on a page. Because the iFrame is an inline element, the iFrame does not need to be used in a typical frameset, as described with respect to **FIG. 3(b)****,** but can alternatively be positioned on the page similar to text, images, or other inline elements using an "align" or similar attribute.

A content provider thus can include an advertisement, such as a banner ad, for example, in a page by using the iFrame tag and providing a URL that points to the same or another domain. It often is the case that it is desirable to display an ad that is likely to be of interest to the user viewing the page. For example, if a user is viewing a page of children's books, an advertisement relating to children's books can be much more likely to be of interest to the user than a randomly selected advertisement, such as may relate to sporting goods or alcoholic beverages. Thus, it can be desirable to pass information to an advertising domain that can be used to determine and/or provide an appropriate advertisement. In a conventional approach, information for the page can be passed in the URL. For example, a link can be included in the iFrame source attribute that includes parameters relating to the content of the page to be displayed, such as:
<iframe src="pageURL.com/books/children"></iframe>
Using such an approach, the content provider can provide parameters to the advertising domain that indicate a category, sub-category, or other such information relating to the content of the page. Other approaches can be used as well, such as including a name or information for a particular item being displayed, a request for a particular type of advertisement, etc.

A potential downside to such an approach, however, is that the information being passed to the advertising domain also can be exposed to a third party. If the request is sent across a publicly accessible network, such as the Internet, then unauthorized parties can attempt to intercept or monitor the requests. In some cases, a third party might include code in an advertisement or other such object that is able to capture information from the URL and provide that information to the third party or another such party. This information then can be used to determine a type of content that is of interest to a user. The information can be associated with an Internet protocol (IP) address, identifier in a user cookie, or other such identifier to attempt to associate the information with a particular user. Over time, a profile of a particular user can be developed that can allow the third party to target advertisements to that user, or to provide the information to another party that can use the profile to target advertisements or other content to the user.

Such an approach can be detrimental to the original content provider in a number of ways. For example, the types of content being browsed by a user on the site are exposed to outside parties, which the user can view as an invasion of privacy. This may lead to ill will with respect to the content provider, and can cause the user to no longer return to the provider's site. Further, third parties that are able to target ads or other such content to specific users can market targeted content to providers that is focused on specific user profiles. Entities such as advertisers then may choose to work with these third parties instead of the content providers. Further, these third parties can offer lower rates than the content providers, as content providers typically charge more for a directed ad on a specific page or site than a third party might offer for an ad that could be displayed on any site, but that would be targeted to a user profile. Thus, by exposing the data of the content provider, the content provider actually can actually end up reducing the advertising revenue directed to that provider.

Systems and methods in accordance with various embodiments address these and other issues by, for example, preventing unauthorized third parties from accessing proprietary targeting information, such as may be included in a URL used to call a supplemental content selection service or supplemental content server. As discussed, the targeting information can include categorization and other information that can be used to build a profile of the content provider, and can include behavioral or other information for a user that can be used to generate a profile for the user. In many cases the customer will not be identified via the targeting information, but information may be stored in a tracking cookie or other appropriate location that can allow a third party to build a profile over time.

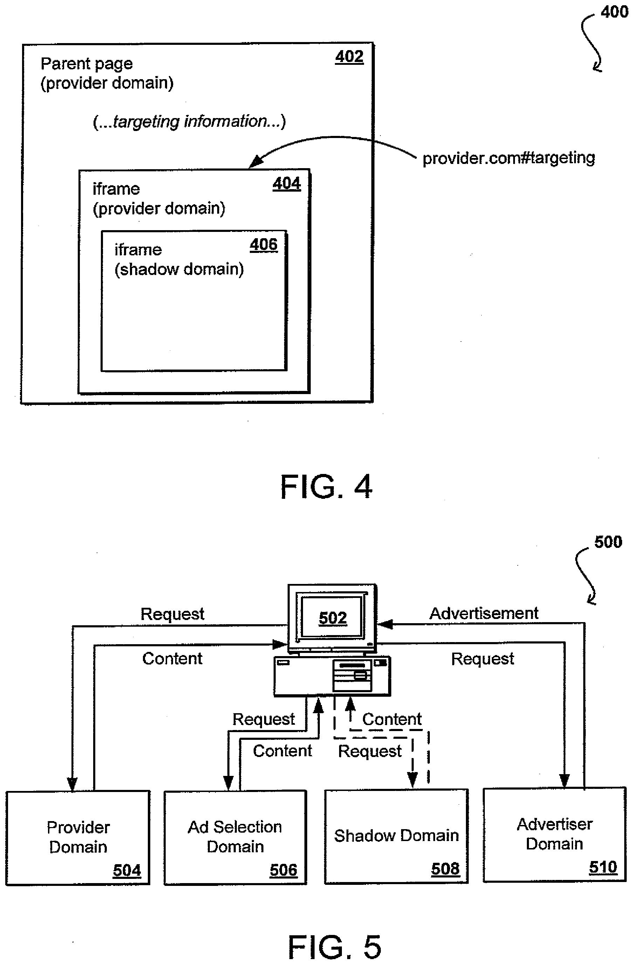

As discussed, a system in accordance with at least one embodiment can utilize nested iFrames or other such interface elements to include advertising or other supplemental content on a page that is served from a third party provider. **FIG. 4** illustrates an example **400** of the use of nested iFrames that can be used in accordance with various embodiments. In this example, which relates to advertising in an Internet-based environment, the primary (or "parent") page **402** is a page of file of content that resides in, and is served from, the provider domain. As used herein, a "file" refers generically to any set or grouping of information that might be associated with a particular request or group of requests. A first iFrame **404** can be generated on the parent page, such as via JavaScript or other code executing on the client device, or by being generated server-side and emitted directly as an iFrame tag on the page. The first iFrame **404** can be used to contact the ad server.

As discussed, the first iFrame **404** can be a "friendly" iFrame that resides in the same domain as the parent page, here also in the provider domain. The use of a friendly iFrame on the page provides various advantages, such as the ability to pass information from the parent page to the iFrame page, as well as the ability of content served from the friendly iFrame to expand beyond the bounds of the frame to other areas of the parent page. If a single template page is used for the first iFrame, this page can be cached on a content delivery network (CDN), client device, browser, or other appropriate device or component such that the page will load more quickly and less bandwidth will be required. As an added benefit, certain content of the first iFrame **404** can expand beyond the bounds of the frame to other areas of the parent page **402.**

The page for the first iFrame **404** can include JavaScript or other client-side code able to generate a second iFrame **406,** if the second iFrame is not otherwise provided. This second iFrame can reside in another domain, such as a shadow domain, that is separate from the provider domain. The call to the actual third party ad provider can come from the shadow domain in the second iFrame, such that the ad and/or ad provider cannot obtain information from the parent page, or determine the original URL from the provider. Further, the call from the file in the shadow domain can include ad parameters specified by the ad server, instead of the targeting data from the content provider.

**FIG. 5** shows an example of logical flow **500** for the components or entities that interact in such an embodiment. Here, the client device **502** sends a request for content to the provider domain **504,** such as by following a URL, where the provider domain can respond with information such as the parent file and a URL including targeting and segmenting information, etc. The targeting information can include, for example, the category, page, user behavioral segment(s) (*e.g.,* early adopter), item identifier, etc., corresponding to the original request for content. The client device can contact the ad manager domain **506** (or ad selection service, ad server domain, or supplemental content manager domain) with the targeting information and can receive the ad parameters, link data, and other information needed to serve the selected ad from the ad provider. As discussed, a template file is used in the shadow domain **508,** such that if the file is available to the client device **502** a call can be made to the shadow domain to retrieve the file. Once the client device has the template file and ad parameters, etc., a request can be sent to the advertiser domain **510,** which can serve the ad content to be displayed on the client device **502,** such as on a Web page rendered in a Web browser on the client device.

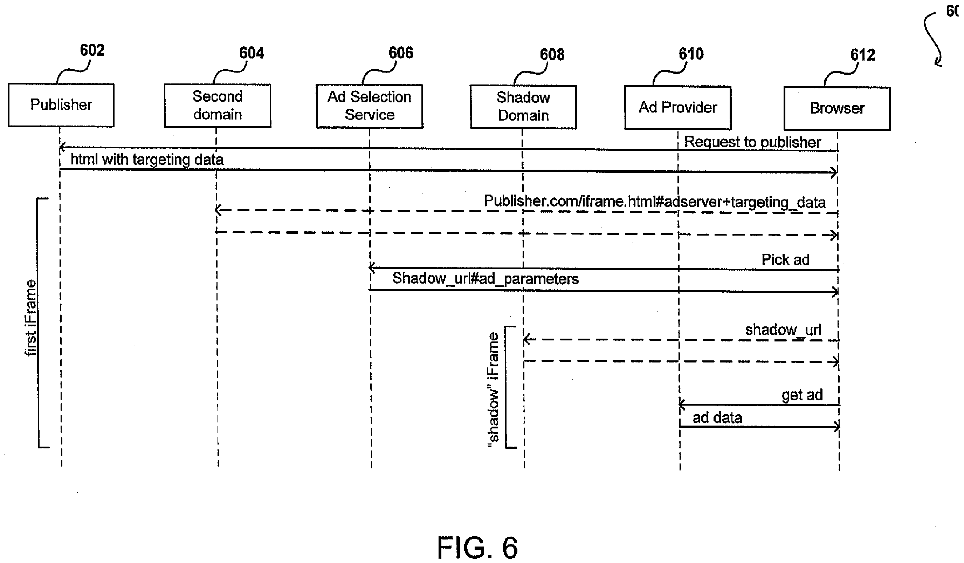

**FIG. 6** illustrates an example flow of requests and responses **600** between these components that can be used to anonymously serve directed ads in accordance with one embodiment. In this example, the browser **612** sends a request to the publisher **602** (or content provider) of a page of content of interest to a user. The publisher responds with the page of content, such as may take the form of hypertext markup language (HTML) or another appropriate coding language to be rendered in the browser. The page specifies a first or outer iFrame to be displayed, and identifies a first file (e.g., a template file) to be rendered in the first iFrame. As discussed, if the template file is available to the client device, then no request is needed to obtain the file. If the current version of the template file is not accessible to the client device, such as stored in a local cache, the browser or other interface application or element can make a call into a second domain (which may or may not correspond to the content provider) to obtain the file. As illustrated, the calls represented by dotted lines are optional, such as where a call is not made if a cached copy of a file or other information is available. In this example, the call for the template file includes the ad server and targeting parameters in the URL. This can take the form of, for example:
<iframe src="seconddomain.com/iframe.html#adserver;targeting_data">
This information is included after an anchor symbol ("#") as anchor parameters, instead of after an argument ("?") symbol, such that the anchor parameters will be interpreted together as an anchor on the page, and not as arguments, such that the URL will not be interpreted as a URL for a different page when the parameters change, allowing the page to be cached for differing parameters.

Further, the client-side code can be programmed to treat everything after the anchor symbol as arguments. If the parameter(s) after the anchor symbol do not exist as an anchor on the page, the browser will not do anything with the anchor as far as changing the field of view or location, such that there is no "jumping around" within the page as a result of the inclusion of the anchor parameters.

Once the first iFrame has the template file, a request can be sent to the ad server domain **606,** which can pass the targeting data in the URL as well. This can take the form of, for example:
adserver.com/targeting_data
or
adserver.com#targeting_data.

Upon receiving the request, the ad server can analyze the targeting data and select information for an appropriate ad to be displayed. The ad server then can return ad parameters to be provided to an ad provider to obtain the targeted advertising content. In some embodiments the ad server can return a URL to use to obtain the ad, while in other embodiments the ad server will return the ad parameters and the client-side code on the template page of the first iFrame will generate the appropriate URL.

Once the browser **612** has the ad parameters from the ad server **606,** a second, nested iFrame can be generated on the page in the first iFrame, such as via JavaScript on the template page of the first iFrame or via an iFrame URL returned from the ad server. If the file (or information) for the second nested iFrame is not available to the client device, a call can be made to the shadow domain **608** in at least one embodiment to obtain the file. If the file is available from cache (or another appropriate location for the client device), no call needs to be made to the shadow domain. When calling to the shadow domain, the call can have a form such as:
<iframe src="shadowcom/ads.html#ad_paratneters">
When the page is obtained, from the shadow domain or from cache, etc., the browser **612** can submit a request to the ad provider **610** for the ad content to be served. This request can take the form of, for example:
adprovider.com/ad_parameters
or
adprovider.com# ad_parameters.
When the ad provider receives the request, the ad provider can return the requested content to the browser **612.** The returned content can include content such as image, audio, video, Flash, gaming, or other such content, which can be combined with click-through links or other such information such that the code on the page in the second nested iFrame can generate the full ad to be rendered on the browser. In one embodiment, the script on the template page is programmed to determine that a first parameter indicates where the ad content is stored, the second parameter is used to identify the ad, and the third parameter provides the click-through URL that is to be used with the ad to direct the user to a specific location or address upon selection of the advertisement. The client-side script can assemble those pieces and load the ad (or other supplemental content) from the final or third party provider.

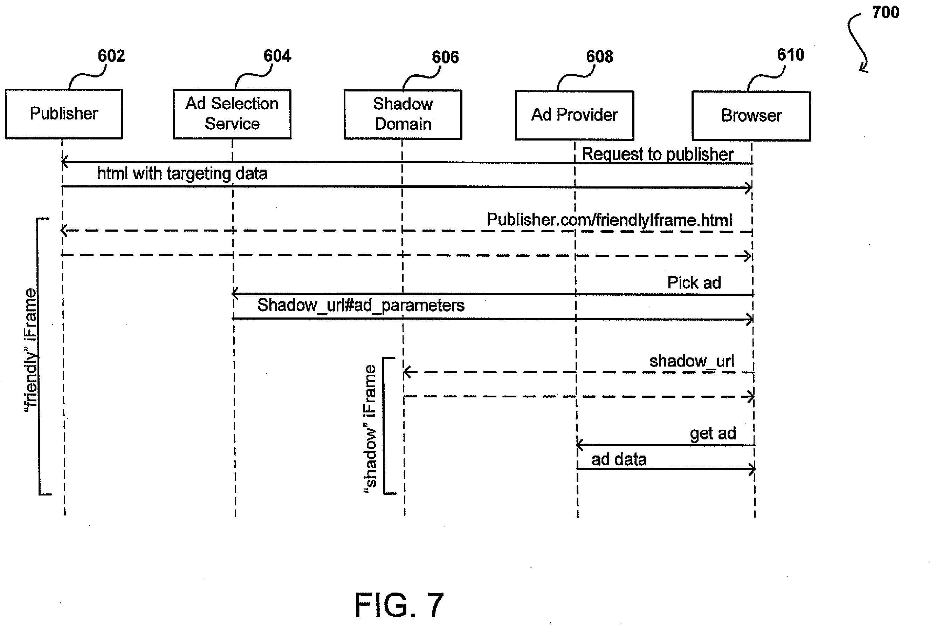

**FIG. 7** illustrates a slightly different flow **700,** wherein information is not passed to the first iFrame through the anchor of the URL. In this case, the targeting data and other such content is included in the code of the parent page, such as a block of JavaScript variables. In this example, the first iFrame is a friendly iFrame is in the same domain as the parent page, such that the script on the iFrame template page can obtain the information from the parent page. Thus, the call for the template page does not need to include parameters after an anchor symbol, but can specify the template page for the iFrame without including such parameters. Such an approach can be advantageous to the approach of **FIG. 6** in cases where a browser or other application is able to pull the anchor from a URL, as locating the parameters within the parent page can ensure that the parameters are inaccessible to a third party advertisement located in the shadow domain.

As discussed, such approaches can allow for targeted content to be served by a third party provider without exposing information such as targeting data, user behavior information, or the original referrer identity. There also can be additional benefits to such an approach. As discussed, the ability to use cacheable files for the first iFrame and shadow domain pages can improve the overall latency of the page, decreasing the overall loading time as less information needs to be transferred and content can be loaded in parallel from different domains without having to worry about the number of concurrent connections to any server, etc. For advertising, the overall number and rate of ads that are actually served can increase, which also can improve aspects such as click through rate and number of impressions. Such an approach also can provide a benefit in the scheduling and trafficking of ads, as a single file can be used instead of a file for each type of ad, as in other approaches, which requires building and maintaining a system to manage the hundreds or thousands of types of ads. The content provider also can save network bandwidth charges as the iFrame file will not need to be repeatedly sent, which can represent a huge cost savings for large providers.

As mentioned, another benefit to such an approach is that a friendly iFrame can allow advertising content to expand beyond the normal bounds of the iFrame and onto the real estate of the parent page. Such functionality allows for the inclusion of content such as expandable rich media, which is typically content that is able to stretch beyond an initial height and width when a customer rolls over, hovers over, clicks on, or interacts with the content, for example. In one embodiment, the expandable ads function as a layer over the page such that the underlying content is not modified or affected by the expansion. In another embodiment, expandable ads can push the surrounding content as those ads expand.

In some embodiments, multiple iFrames and/or other such domain-restrictive interface elements can exist on the same parent page. As the parameters that are extracted from the parent page are encoded into the iFrame page, calling different iFrame pages can cause different parameters to be extracted. Such functionality can be desirable in situations such as when there are a number of different ads to be displayed on the page. In some embodiments, the variables in the JavaScript block on the parent page can have an associative array with keys that correspond to the names of the respective iFrames or other interface elements to be used.

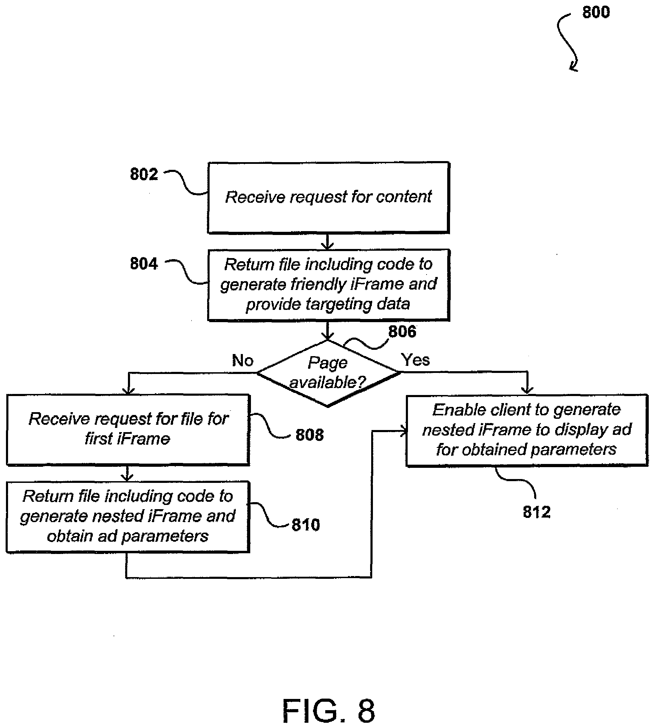

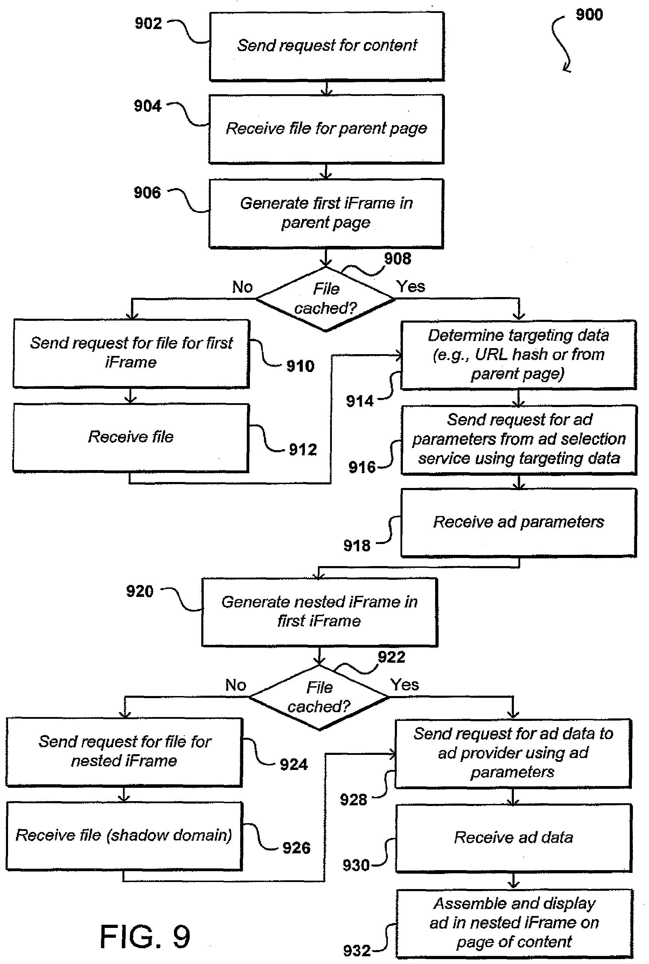

In order to better understand some of the example flows discussed above, **FIGS. 8** and **9** illustrate flow charts including aspects of these flows from the perspective of the original content provider and from the client device, respectively. For example, **FIG. 8** illustrates an example method **800** for providing content for display to a user, in response to a request and including supplemental or targeted content (advertising content in this example), that can be used in accordance with various embodiments. While various steps of the method are displayed, it should be understood that various steps can be performed in parallel or in different orders, such that an order should not be implied unless otherwise indicated herein. Further, additional, alternative, or fewer steps can be utilized in any appropriate order within the scope of the various embodiments. Further, at least some of the steps may be provided by separate components and/or services.

In the example process, the content provider receives a request for content **802.** As discussed, this can comprise a hypertext transfer protocol (HTTP) request for HTML and/or related content submitted by a browser of a client device in an Internet-based context, or a similar request in other contexts as discussed elsewhere herein. The request can be a request for specific content, such as information for a particular item, a search request, a category-based request, etc. The content provider can generate the appropriate file and return the file to the client device in response to the request **804.** As discussed, this file can include information that can be used to obtain advertising or other supplemental content, such as information specifying an ad selection service to contact and targeting data specifying parameters that are to be used in selecting the advertising. The file also can include code specifying the inclusion of at least one first iFrame on the page. As discussed, the file can include the targeting parameters in a block of JavaScript variables or other appropriate location that can be accessed by a friendly iFrame, or can be included in the anchor of a URL specified to an iFrame in any appropriate domain. When the client device receives the file, the code in the file will cause the client device to generate the first iFrame and load the specified file for the first iFrame. If the file or page is not available to the client device **806,** the content provider (or other provider in various embodiments) will receive a request for the file to present in the first iFrame **808.** The content provider then can return the file for the first iFrame **810,** which will include code for performing such tasks as including a nested iFrame, obtaining ad parameters from the ad selection service, obtaining a page for the nested iFrame in a shadow domain, obtaining the ad from an ad provider using the ad parameters, and displaying the ad in the nested iFrame. Once the client device has the file for the friendly iFrame, the client can perform the tasks discussed above **812.**

**FIG. 9** illustrates a similar process **900** from the perspective of a client device. As should be understood, these tasks can be performed by a browser, interface, or display application, along with various other components on, or accessible to, various client devices. In response to an instruction from a user, application, service, or other such source, the client device will submit a request for content to the content provider **902.** The client device will receive the requested file **904,** which can include information for the ad selection service and ad parameters as discussed above. The client device can execute code in the received file, such as to include a first iFrame in the parent page **906.** The client device can determine whether the file for the first iFrame is cached **908** or otherwise accessible. If not, the client device submits a request for the file to the appropriate provider **910** and receives the file **912.** Once the client device has the file for the first iFrame, (or at another appropriate time) the client device can determine the targeting data and ad selection service to be used in obtaining ad data **914.** As discussed, this can involve a task such as parsing the parameters included after an anchor symbol in a URL, or pulling the information from the parent page using specified parameter names, etc. The client device then can send a request to the determined ad selection service that includes the determined targeting data **916.** In response, the client device will receive ad parameters to be submitted to an identified ad provider **918.** As discussed, the ad parameters identify a specific ad, ad type, etc., and do not include any of the targeting data from the content provider.

The client device will also cause a nested iFrame to be included in the first iFrame **920.** As discussed, the nested iFrame can reside in the shadow domain to protect the referrer information and information on the parent page. The client device can determine whether the file for the nested iFrame in the shadow domain is located in cache **922,** or is otherwise locally accessible. If not, the client device can submit a request for the file to the shadow domain **924** and receive the file **926.** Once the client device has the file for the nested iFrame, (or at another appropriate time) the client device can send the request for ad content to the ad provider using the specified ad parameters **928.** When the ad data is received from the ad provider **930,** the client device can assemble and display the ad in the nested iFrame on the page **932.** During portions of this process, the other content for the parent page (*e.g.*, images or other such content) can be loading in parallel, which can improve the overall load speed of the page. Further, various steps of the process can be handled concurrently, or in different orders, and can be performed by other components or service as should be apparent. As discussed, although the description was presented with respect to advertising, it should be understood that other types of targeted or supplemental content can be used as well within the scope of the various embodiments.

As discussed above, the various embodiments can be implemented in a wide variety of operating environments, which in some cases can include one or more user computers, computing devices, or processing devices which can be used to operate any of a number of applications. User or client devices can include any of a number of general purpose personal computers, such as desktop or laptop computers running a standard operating system, as well as cellular, wireless, and handheld devices running mobile software and capable of supporting a number of networking and messaging protocols. Such a system also can include a number of workstations running any of a variety of commercially-available operating systems and other known applications for purposes such as development and database management. These devices also can include other electronic devices, such as dummy terminals, thin-clients, gaming systems, and other devices capable of communicating via a network.

Various aspects also can be implemented as part of at least one service or Web service, such as may be part of a service-oriented architecture. Services such as Web services can communicate using any appropriate type of messaging, such as by using messages in extensible markup language (XML) format and exchanged using an appropriate protocol such as SOAP (derived from the "Simple Object Access Protocol"). Processes provided or executed by such services can be written in any appropriate language, such as the Web Services Description Language (WSDL). Using a language such as WSDL allows for functionality such as the automated generation of client-side code in various SOAP frameworks.

Most embodiments utilize at least one network that would be familiar to those skilled in the art for supporting communications using any of a variety of commercially-available protocols, such as TCP/IP, OSI, FTP, UPnP, NFS, CIFS, and AppleTalk. The network can be, for example, a local area network, a wide-area network, a virtual private network, the Internet, an intranet, an extranet, a public switched telephone network, an infrared network, a wireless network, and any combination thereof.

In embodiments utilizing a Web server, the Web server can run any of a variety of server or mid-tier applications, including HTTP servers, FTP servers, CGI servers, data servers, Java servers, and business application servers. The server(s) also may be capable of executing programs or scripts in response requests from user devices, such as by executing one or more Web applications that may be implemented as one or more scripts or programs written in any programming language, such as Java®, C, C# or C++, or any scripting language, such as Perl, Python, or TCL, as well as combinations thereof. The server(s) may also include database servers, including without limitation those commercially available from Oracle®, Microsoft®, Sybase®, and IBM®.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network ("SAN") familiar to those skilled in the art. Similarly, any necessary files for performing the functions attributed to the computers, servers, or other network devices may be stored locally and/or remotely, as appropriate. Where a system includes computerized devices, each such device can include hardware elements that may be electrically coupled via a bus, the elements including, for example, at least one central processing unit (CPU), at least one input device (*e.g.,* a mouse, keyboard, controller, touch screen, or keypad), and at least one output device (*e.g.,* a display device, printer, or speaker). Such a system may also include one or more storage devices, such as disk drives, optical storage devices, and solid-state storage devices such as random access memory ("RAM") or read-only memory ("ROM"), as well as removable media devices, memory cards, flash cards, etc.

Such devices also can include a computer-readable storage media reader, a communications device (*e.g.*, a modem, a network card (wireless or wired), an infrared communication device, etc.), and working memory as described above. The computer-readable storage media reader can be connected with, or configured to receive, a computer-readable storage medium, representing remote, local, fixed, and/or removable storage devices as well as storage media for temporarily and/or more permanently containing, storing, transmitting, and retrieving computer-readable information. The system and various devices also typically will include a number of software applications, modules, services, or other elements located within at least one working memory device, including an operating system and application programs, such as a client application or Web browser. It should be appreciated that alternate embodiments may have numerous variations from that described above. For example, customized hardware might also be used and/or particular elements might be implemented in hardware, software (including portable software, such as applets), or both. Further, connection to other computing devices such as network input/output devices may be employed.

Storage media and computer readable media for containing code, or portions of code, can include any appropriate media known or used in the art, including storage media and communication media, such as but not limited to volatile and non-volatile, removable and non-removable media implemented in any method or technology for storage and/or transmission of information such as computer readable instructions, data structures, program modules, or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices, or any other medium which can be used to store the desired information and which can be accessed by the a system device. Based on the disclosure and teachings provided herein, a person of ordinary skill in the art will appreciate other ways and/or methods to implement the various embodiments.

## Claims

1. A computer-implemented method of determining supplemental content to be displayed with requested content, comprising:
under control of one or more computer systems configured with executable instructions,
receiving (802) a request for content from a client device (202; 502) at a content provider (206); and
providing (804) a response to the client device including a first file relating to the requested content, the first file including code for including a first interface element (404) in a page (402) rendered on the client device, the response including an address for a second file to be rendered in the first interface element, the response further including targeting data and an identity of a supplemental content selection provider (606),
wherein the second file includes code for determining the targeting data and submitting a request to the supplemental content selection provider using the targeting data, the second file further including code for including a second interface element (406) within the first interface element and rendering a third file in the second interface element from a shadow domain (508; 608), the second interface element being restricted from cross-domain communication with the domain of the content provider, the second file further including code for receiving identification of a supplemental content provider (208; 510; 610) and supplemental content parameters from the supplemental content selection provider, the second file further including code for submitting a request for supplemental content including the supplemental content parameters to the supplemental content provider, the supplemental content to be rendered in the second interface element,
wherein the targeting data cannot be determined from the second interface element in the shadow domain, and
wherein the supplemental content parameters are obtained by analyzing the targeting data, and wherein the supplemental content parameters specify supplemental content or a type of supplemental content to be displayed, but do not include the targeting data.

2. The method of claim 1, wherein the code included in the second file for determining the targeting data comprises code for determining the targeting data by parsing parameters after an anchor symbol in a uniform resource locator, URL, specified by the content provider.

3. The method of claim 1, wherein the code included in the second file for determining the targeting data comprises code for determining the targeting data by obtaining information from parameters stored in the first file in the common domain.

4. The computer-implemented method of one of claims 1 to 3, wherein:
the first interface element is a first inline frame, iFrame; and
the second interface element is nested iFrame in the first iFrame.

5. The computer-implemented method of one of claims 1 to 3, further comprising: when the client device does not already have access to a current version of the second file, receiving (808) a request for the second file from the client device and providing (810) the second file to the client device.

6. The computer-implemented method of one of claims 1 to 3, wherein:
the first file includes information for a plurality of instances of supplemental content to be displayed, an interface element being specified for at least one of those instances.

7. The computer-implemented method of claim 6, wherein:
each second file to be rendered in a different interface element obtains a different set of targeting data for a respective instance of supplemental content.

8. The computer-implemented method of one of claims 1 to 3, wherein:
the targeting data includes at least one of category information, type of content, page identification information, user behavioral segment information, item identification information, and campaign information.

9. The computer-implemented method of one of claims 1 to 3, wherein:
the source of the first file cannot be determined from the second interface element in the shadow domain.

10. The computer-implemented method of claim 3, wherein:
obtaining information from parameters stored in the first file includes causing client-side script to be executed on the client device to access parameter values stored in a block of variables of the first file.

11. A system (200; 500) for determining advertising to be displayed with requested content in an electronic environment, comprising:
a processor;
a memory device including instructions that, when executed by the processor, cause the processor to:
receive (802) a request for content from a client device (202; 502) at a content provider (206); and
provide (804) a response to the client device including a first file relating to the request for content, the first file including code for generating a first interface element (404) in a page (402) rendered on the client device using the first file, the response including an address for a second file to be rendered for the first interface element, the response further including targeting data and an identity of an ad selection service (506),
wherein the second file includes code for determining the targeting data and submitting a request to the ad selection service using the targeting data, the second file further including code for including a second interface element (406) in the first interface element and rendering a third file in the second interface element from a shadow domain (508; 608), the second interface element being restricted from cross-domain communication with the domain of the content provider, the second file further including code for receiving identification of an ad provider (208; 510; 610) and ad parameters from the ad selection service, the second file further including code for submitting a request for ad data including the ad parameters to the ad provider, the ad data to be rendered in the second interface element,
wherein the targeting data cannot be determined from the second interface element in the shadow domain, and
wherein the ad parameters are obtained by analyzing the targeting data, and wherein the ad parameters specify an ad or a type of ad to be displayed, but do not include the targeting data.

12. The system of claim 11, wherein:
determining the targeting data using the second file includes one of:
(a) parsing parameters after an anchor symbol in a uniform resource locator, URL, specified by the content provider or
(b) pulling information from parameters stored in the first file in the provider domain when the first interface element is the domain of the content provider.

13. The system of claim 11, wherein:
the first file includes information for a plurality of ads to be displayed, an interface element being specified for at least one of those ads.

14. The system of claim 13, wherein:
each second file to be rendered in a different interface element obtains a different set of targeting data for a respective ad.

## Patentansprüche

1. Computerimplementiertes Verfahren des Bestimmens von mit angefordertem Inhalt anzuzeigendem Zusatzinhalt, umfassend:
unter Steuerung von einem oder mehreren Computersystemen, die mit ausführbaren Anweisungen konfiguriert sind,
Empfangen (802) einer Anforderung für Inhalt von einer Client-Vorrichtung (202; 502) bei einem Inhaltsanbieter (206); und
Bereitstellen (804) einer Antwort an die Client-Vorrichtung, einschließlich einer ersten Datei, die sich auf den angeforderten Inhalt bezieht, wobei die erste Datei Code zum Einschließen eines ersten Benutzeroberflächenelements (404) in einer an der Client-Vorrichtung gerendeten Seite (402) beinhaltet, wobei die Antwort eine Adresse für eine zweite in dem ersten Benutzeroberflächenelement zu rendernde Datei beinhaltet, wobei die Antwort ferner Zieldaten und eine Identität eines Zusatzinhaltsauswahlanbieters (606) beinhaltet,
wobei die zweite Datei Code zum Bestimmen der Zieldaten und Senden einer Anforderung an den Zusatzinhaltsauswahlanbieter unter Verwendung der Zieldaten beinhaltet, wobei die zweite Datei ferner Code zum Einschließen eines zweiten Benutzeroberflächenelements (406) in dem ersten Benutzeroberflächenelement und Rendern einer dritten Datei in dem zweiten Benutzeroberflächenelement von einer Schattendomain (508; 608) beinhaltet, wobei das zweite Benutzeroberflächenelement im Hinblick auf eine domainübergreifende Kommunikation mit der Domain des Inhaltsanbieters beschränkt ist, wobei die zweite Datei ferner Code zum Empfangen einer Identifikation eines Zusatzinhaltsanbieters (208; 510; 610) und von Zusatzinhaltsparametern von dem Zusatzinhaltsauswahlanbieter beinhaltet, wobei die zweite Datei ferner Code zum Senden einer Anforderung für Zusatzinhalt, einschließlich der Zusatzinhaltsparameter, an den Zusatzinhaltsanbieter beinhaltet, wobei der Zusatzinhalt in dem zweiten Benutzeroberflächenelement gerendert werden soll,
wobei die Zieldaten nicht von dem zweiten Benutzeroberflächenelement in der Schattendomain bestimmt werden können und
wobei die Zusatzinhaltsparameter durch Analysieren der Zieldaten erhalten werden und wobei die Zusatzinhaltsparameter Zusatzinhalt oder einen Typ von Zusatzinhalt, der angezeigt werden soll, spezifizieren, aber die Zieldaten nicht beinhalten.

2. Verfahren nach Anspruch 1, wobei der in der zweiten Datei enthaltene Code zum Bestimmen der Zieldaten Code zum Bestimmen der Zieldaten durch Auswerten von Parametern nach einem Ankersymbol in einem Uniform Resource Locator, URL, umfasst, die durch den Inhaltsanbieter spezifiziert sind.

3. Verfahren nach Anspruch 1, wobei der in der zweiten Datei enthaltene Code zum Bestimmen der Zieldaten Code zum Bestimmen der Zieldaten durch Erhalten von Informationen von in der ersten Datei in der allgemeinen Domain gespeicherten Parametern erhält.

4. Computerimplementiertes Verfahren nach einem der Ansprüche 1 bis 3, wobei:
das erste Benutzeroberflächenelement ein erster Inlineframe, iFrame, ist; und
das zweite Benutzeroberflächenelement ein verschachtelter iFrame in dem ersten iFrame ist.

5. Computerimplementiertes Verfahren nach einem der Ansprüche 1 bis 3, ferner umfassend:
wenn die Client-Vorrichtung nicht bereits Zugriff auf eine aktuelle Version der zweiten Datei hat, Empfangen (808) einer Anforderung für die zweite Datei von der Client-Vorrichtung und Bereitstellen (810) der zweiten Datei für die Client-Vorrichtung.

6. Computerimplementiertes Verfahren nach einem der Ansprüche 1 bis 3, wobei:
die erste Datei Informationen für eine Vielzahl von Fällen von anzuzeigendem Zusatzinhalt beinhaltet, wobei ein Benutzeroberflächenelement für mindestens einen dieser Fälle spezifiziert ist.

7. Computerimplementiertes Verfahren nach Anspruch 6, wobei:
jede zweite in einem unterschiedlichen Benutzeroberflächenelement zu rendernde Datei einen unterschiedlichen Zieldatensatz für einen entsprechenden Fall von Zusatzinhalt erhält.

8. Computerimplementiertes Verfahren nach einem der Ansprüche 1 bis 3, wobei:
die Zieldaten mindestens eines aus Kategorieinformationen, Inhaltstyp, Seitenidentifikationsinformationen, Benutzerverhaltensegmentinformationen, Objektidentifikationsinformationen und Kampagneninformationen beinhalten.

9. Computerimplementiertes Verfahren nach einem der Ansprüche 1 bis 3, wobei:
die Quelle der ersten Datei nicht von dem zweiten Benutzeroberflächenelement in der Schattendomain bestimmt werden kann.

10. Computerimplementiertes Verfahren nach Anspruch 3, wobei:
ein Erhalten von Informationen von in der ersten Datei gespeicherten Parametern ein Veranlassen beinhaltet, dass das clientseitige Skript zum Zugreifen auf in einem Block von Variablen der ersten Datei gespeicherte Parameterwerte an der Client-Vorrichtung ausgeführt wird.

11. System (200; 500) zum Bestimmen von mit angefordertem Inhalt anzuzeigender Werbung in einer elektronischen Umwelt, umfassend:
einen Prozessor;
eine Speichervorrichtung, die Anweisungen beinhaltet, die, wenn sie durch den Prozessor ausgeführt werden, den Prozessor zu Folgendem veranlassen:
Empfangen (802) einer Anforderung für Inhalt von einer Client-Vorrichtung (202; 502) bei einem Inhaltsanbieter (206); und
Bereitstellen (804) einer Antwort an die Client-Vorrichtung, einschließlich einer ersten Datei, die sich auf die Anforderung für Inhalt bezieht, wobei die erste Datei Code zum Erzeugen eines ersten Benutzeroberflächenelements (404) in einer an der Client-Vorrichtung gerenderten Seite (402) unter Verwendung der ersten Datei beinhaltet, wobei die Antwort eine Adresse für eine zweite zu rendernde Datei für das erste Benutzeroberflächenelement beinhaltet, wobei die Antwort ferner Zieldaten und eine Identität eines Werbeauswahldiensts (506) beinhaltet,
wobei die zweite Datei Code zum Bestimmen der Zieldaten und Senden einer Anforderung an den Werbeauswahldienst unter Verwendung der Zieldaten beinhaltet, wobei die zweite Datei ferner Code zum Einschließen eines zweiten Benutzeroberflächenelements (406) in dem ersten Benutzeroberflächenelement und Rendern einer dritten Datei in dem zweiten Benutzeroberflächenelement von einer Schattendomain (508; 608) beinhaltet, wobei das zweite Benutzeroberflächenelement im Hinblick auf domainübergreifende Kommunikation mit dem Inhaltsanbieter beschränkt ist, wobei die zweite Datei ferner Code zum Empfangen einer Identifikation eines Werbeanbieters (208; 510; 610) und von Werbeparametern von dem Werbeauswahldienst beinhaltet, wobei die zweite Datei ferner Code zum Senden einer Anforderung für Werbedaten, einschließlich der Werbeparameter, an den Werbeanbieter beinhaltet, wobei die Werbedaten in dem zweiten Benutzeroberflächenelement gerendert werden sollen,
wobei die Zieldaten nicht von dem zweiten Benutzeroberflächenelement in der Schattendomain bestimmt werden können und
wobei die Werbeparameter durch Analysieren der Zieldaten erhalten werden und wobei die Werbeparameter eine Werbeanzeige oder einen Werbeanzeigetyp spezifizieren, die/der angezeigt werden soll, aber die Zieldaten nicht beinhalten.

12. System nach Anspruch 11, wobei:
ein Bestimmen der Zieldaten unter Verwendung der zweiten Datei eines von Folgendem beinhaltet:
(a) Auswerten von Parametern nach einem Ankersymbol in einem Uniform Resource Locator, URL, die durch den Inhaltsanbieter spezifiziert sind, oder
(b) Ziehen von Informationen aus Parametern, die in der ersten Datei in der Anbieterdomain gespeichert sind, wenn das erste Benutzeroberflächenelement die Domain des Inhaltsanbieters ist.

13. System nach Anspruch 11, wobei:
die erste Datei Informationen für eine Vielzahl von Werbeanzeigen beinhaltet, die angezeigt werden soll, wobei ein Benutzeroberflächenelement für mindestens eine dieser Werbeanzeigen spezifiziert ist.

14. System nach Anspruch 13, wobei:
jede zweite Datei, die in einem unterschiedlichen Benutzeroberflächenelement gerendert wird, einen unterschiedlichen Zieldatensatz für eine entsprechende Werbeanzeige erhält.

## Revendications

1. Procédé mis en oeuvre par ordinateur pour la détermination de contenu supplémentaire à afficher avec un contenu demandé, comprenant :
sous la commande d'au moins un système informatique configuré avec des instructions exécutables,
la réception (802) d'une demande de contenu de la part d'un dispositif client (202 ; 502) au niveau d'un fournisseur de contenu (206) ; et
la fourniture (804) d'une réponse au dispositif client comprenant un premier fichier relatif au contenu demandé, le premier fichier comprenant un code pour inclure un premier élément d'interface (404) dans une page (402) rendue sur le dispositif client, la réponse comprenant une adresse pour un deuxième fichier à rendre dans le premier élément d'interface, la réponse comprenant en outre des données de ciblage et une identité d'un fournisseur de sélection de contenu supplémentaire (606),
le deuxième fichier comprenant un code pour déterminer les données de ciblage et soumettre une demande au fournisseur de sélection de contenu supplémentaire à l'aide des données de ciblage, le deuxième fichier comprenant en outre un code pour inclure un deuxième élément d'interface (406) dans le premier élément d'interface et rendre un troisième fichier dans le deuxième élément d'interface depuis un domaine double (508 ; 608), le deuxième élément d'interface ne pouvant pas effectuer une communication inter-domaine avec le domaine du fournisseur de contenu, le deuxième fichier comprenant en outre un code pour recevoir une identification d'un fournisseur de contenu supplémentaire (208 ; 510 ; 610) et des paramètres de contenu supplémentaire provenant du fournisseur de sélection de contenu supplémentaire, le deuxième fichier comprenant en outre un code pour soumettre une demande de contenu supplémentaire comprenant les paramètres de contenu supplémentaire au fournisseur de contenu supplémentaire, le contenu supplémentaire devant être rendu dans le deuxième élément d'interface,
les données de ciblage ne pouvant pas être déterminées à partir du deuxième élément d'interface dans le domaine double, et
les paramètres de contenu supplémentaire étant obtenus par l'analyse des données de ciblage, et les paramètres de contenu supplémentaire spécifiant un contenu supplémentaire ou un type de contenu supplémentaire à afficher, mais ne comprenant pas les données de ciblage.

2. Procédé de la revendication 1, dans lequel le code inclus dans le deuxième fichier pour déterminer les données de ciblage comprend un code pour déterminer les données de ciblage par l'analyse de paramètres en fonction d'un symbole d'ancre dans un localisateur de ressources uniforme, URL, spécifié par le fournisseur de contenu.

3. Procédé de la revendication 1, dans lequel le code inclus dans le deuxième fichier pour déterminer les données de ciblage comprend un code pour déterminer les données de ciblage par l'obtention d'informations à partir de paramètres stockés dans le premier fichier dans le domaine commun.

4. Procédé mis en oeuvre par ordinateur de l'une des revendications 1 à 3, dans lequel :
le premier élément d'interface est un premier cadre en ligne, iFrame ; et
le deuxième élément d'interface est un iFrame imbriqué dans le premier iFrame.

5. Procédé mis en oeuvre par ordinateur de l'une des revendications 1 à 3, comprenant en outre :
lorsque le dispositif client n'a pas déjà accès à une version actuelle du deuxième fichier, la réception (808) d'une demande de deuxième fichier de la part du dispositif client et la fourniture (810) du deuxième fichier au dispositif client.

6. Procédé mis en oeuvre par ordinateur de l'une des revendications 1 à 3, dans lequel :
le premier fichier comprend des informations pour une pluralité d'exemples de contenu supplémentaire à afficher, un élément d'interface étant spécifié pour au moins l'un de ces exemples.

7. Procédé mis en oeuvre par ordinateur de la revendication 6, dans lequel :
chaque deuxième fichier à rendre dans un élément d'interface différent obtient un jeu différent de données de ciblage pour un exemple respectif de contenu supplémentaire.

8. Procédé mis en oeuvre par ordinateur de l'une des revendications 1 à 3, dans lequel :
les données de ciblage comprennent au moins un élément parmi des informations de catégorie, un type de contenu, des informations d'identification de page, des informations de segment comportemental d'utilisateur, des informations d'identification d'item et des informations de campagne.

9. Procédé mis en oeuvre par ordinateur de l'une des revendications 1 à 3, dans lequel :
la source du premier fichier ne peut pas être déterminée à partir du deuxième élément d'interface dans le domaine double.

10. Procédé mis en oeuvre par ordinateur de la revendication 3, dans lequel :
l'obtention d'informations à partir de paramètres stockés dans le premier fichier comprend le fait de faire exécuter un script côté client sur le dispositif client pour accéder à des valeurs de paramètre stockées dans un bloc de variables du premier fichier.

11. Système (200; 500) pour déterminer une publicité à afficher avec un contenu demandé dans un environnement électronique, comprenant :
un processeur ;
un dispositif de mémoire comprenant des instructions qui, lorsqu'elles sont exécutée par le processeur, amènent le processeur à :
recevoir (802) une demande de contenu de la part d'un dispositif client (202 ; 502) au niveau d'un fournisseur de contenu (206) ; et
fournir (804) une réponse au dispositif client comprenant un premier fichier relatif à la demande de contenu, le premier fichier comprenant un code pour générer un premier élément d'interface (404) dans une page (402) rendue sur le dispositif client à l'aide du premier fichier, la réponse comprenant une adresse pour un deuxième fichier à rendre pour le premier élément d'interface, la réponse comprenant en outre des données de ciblage et une identité d'un service de sélection de publicité (506),
le deuxième fichier comprenant un code pour déterminer les données de ciblage et soumettre une demande au service de sélection de publicité à l'aide des données de ciblage, le deuxième fichier comprenant en outre un code pour inclure un deuxième élément d'interface (406) dans le premier élément d'interface et rendre un troisième fichier dans le deuxième élément d'interface depuis un domaine double (508 ; 608), le deuxième élément d'interface ne pouvant pas effectuer une communication inter-domaine avec le domaine du fournisseur de contenu, le deuxième fichier comprenant en outre un code pour recevoir une identification d'un fournisseur de publicité (208 ; 510 ; 610) et des paramètres de publicité provenant du service de sélection de publicité, le deuxième fichier comprenant en outre un code pour soumettre une demande de données de publicité comprenant les paramètres de publicité au fournisseur de publicité, les données de publicité devant être rendues dans le deuxième élément d'interface,
les données de ciblage ne pouvant pas être déterminées à partir du deuxième élément d'interface dans le domaine double, et
les paramètres de publicité étant obtenus par l'analyse des données de ciblage, et les paramètres de publicité spécifiant une publicité ou un type de publicité à afficher, mais ne comprenant pas les données de ciblage.

12. Système de la revendication 11, dans lequel :
la détermination des données de ciblage à l'aide du deuxième fichier comprend l'un des éléments suivants :
(a) l'analyse de paramètres en fonction d'un symbole d'ancre dans un localisateur de ressources uniforme, URL, spécifié par le fournisseur de contenu, ou
(b) l'extraction d'informations à partir de paramètres stockés dans le premier fichier dans le domaine de fournisseur lorsque le premier élément d'interface est le domaine du fournisseur de contenu.

13. Système de la revendication 11, dans lequel :
le premier fichier comprend des informations pour une pluralité de publicités à afficher, un élément d'interface étant spécifié pour au moins l'un des ces publicités.

14. Système de la revendication 13, dans lequel :
chaque deuxième fichier à rendre dans un élément d'interface différent obtient un jeu différent de données de ciblage pour une publicité respective.
